# FASCICULE DE BREVET EUROPEEN

(11) **EP 3 584 478 B1**
(45) Date de publication et mention de la délivrance du brevet: **21.07.2021**
(21) Numéro de dépôt: 19179858.6
(22) Date de dépôt: 13.06.2019
(51) Int. Cl.: F16K 17/32, G05D 16/06

(54) **DÉTENDEUR À GAZ**
GASDRUCKREGLER
GAS EXPANSION VALVE

(30) Priorité: 18.06.2018 FR 1855320
(43) Date de publication de la demande: 25.12.2019
(73) Titulaire: Clesse Industries, 63800 Cournon d'Auvergne (FR)
(72) Inventeur: FOURNIER, Eric, 63310 SAINT SYLVESTRE PRAGOULIN (FR); PAPON, Jean-Luc, 63800 COURNON D'AUVERGNE (FR)
(74) Mandataire: Chevalier, Renaud Philippe

(56) Documents cités:
- EP-A1- 0 907 119
- WO-A1-2006/098577
- FR-A1- 2 984 448
- US-A1- 2012 261 005

## Description

La présente demande de brevet se rapporte à un détendeur à sécurité de sous-pression intégrée.

De manière largement répandue, on utilise du gaz de pétrole liquéfié (GPL, comme par exemple du butane, du propane, ou des mélanges de ces gaz) à des fins domestiques.

Ce gaz permet de faire fonctionner des appareils domestiques tels que des chaudières ou des gazinières.

De manière courante, ce gaz est stocké sous haute pression à l'état liquide dans des réservoirs (bouteilles ou cuves) dont la capacité peut typiquement varier de 0,5 kg à 1500 kg, et qui sont remplacés ou rechargés lorsqu'ils sont vides.

Le gaz qui arrive dans les chaudières ou gazinières doit être à une pression très nettement inférieure à celle du stockage en réservoir : cette pression d'utilisation doit typiquement être de l'ordre de 29, 37 ou 50 mbar, ou autres basses pressions.

Il faut donc placer un dispositif de réduction de la pression entre le réservoir de gaz et l'appareil domestique concerné : un tel dispositif, couramment appelé détendeur, permet, grâce à un système de soupape, d'obtenir une régulation en débit (typiquement 4 à 5 kg de gaz par heure) et en pression (typiquement 29, 37 ou 50 mbar) du gaz alimentant l'appareil domestique.

Il peut arriver que des impuretés en provenance du réservoir viennent obturer partiellement ou entièrement l'arrivée de gaz du détendeur, ou bien qu'il y ait une fuite du tuyau de gaz interposé entre la sortie de gaz du détendeur et l'appareil domestique : dans un cas comme dans l'autre, on observe une sous-pression dans le détendeur, et les normes de sécurité en vigueur imposent alors que le détendeur se mette en configuration de sécurité, c'est-à-dire qu'il stoppe la circulation de gaz.

Pour cette raison, il existe dans l'état de la technique des systèmes de sécurité couramment désignés par « UPSO » (« Under Pressure Shut-Off » - fermeture en cas de sous-pression ou d'excès de débit), permettant d'interrompre le flux de gaz sortant du détendeur en cas de sous-pression de ce gaz dans le détendeur.

Le document FR 2984448 déposé au nom de la demanderesse décrit un détendeur de gaz comprenant un corps définissant une chambre munie d'une arrivée et d'entrée de gaz et des moyens de réduction du gaz ainsi que des moyens de blocage de la circulation du gaz comprenant un axe obturateur mobile entre une position d'ouverture et une position de d'obturation complète du gaz.

La présente invention a pour but de fournir un détendeur équipé d'un tel système de sécurité qui soit d'une conception simple, nécessitant un nombre minimum de pièces et, *in fine*, peu coûteux.

On atteint ce but de l'invention avec un détendeur de gaz, comprenant :
- un corps,
- une arrivée et une sortie de gaz débouchant dans ce corps,
- une membrane souple définissant avec ledit corps une chambre de régulation de volume variable,
- un doigt et une chape d'actionnement solidaires de ladite membrane,
- un levier de régulation de débit d'arrivée de gaz coopérant avec ledit doigt, et monté pivotant dans ladite chambre entre :
   - une première position de fermeture correspondant à un volume maximal de ladite chambre, dans laquelle ce levier obture ladite arrivée de gaz,
   - une position maximale d'ouverture correspondant à un volume intermédiaire de ladite chambre, dans laquelle ce levier libère un passage maximal à travers ladite arrivée de gaz, et
   - une deuxième position de fermeture correspondant à un volume minimal de ladite chambre, dans laquelle ce levier obture ladite arrivée de gaz,
   ce levier comprenant une première partie montée pivotante sur ledit corps autour d'un premier axe, et apte à venir obturer ladite arrivée de gaz, et une deuxième partie montée pivotante sur ladite première partie autour d'un deuxième axe et coopérant avec ledit doigt,
- des moyens élastiques de rappel de ladite membrane vers ladite position définissant un volume minimal de ladite chambre,
- une butée solidaire dudit corps, disposée entre ledit doigt et ledit deuxième axe,
- ledit doigt et ladite butée maintenant ladite deuxième partie de levier dans une position inclinée par rapport à la ladite première partie de levier lorsque ce levier se trouve dans ladite deuxième position de fermeture, laquelle inclinaison maintient ladite première partie de levier en position d'obturation de ladite arrivée de
gaz;
- un ressort spirale est interposé entre les premières et deuxième parties du levier.

Grâce à ces caractéristiques, lorsqu'il n'y a plus de pression à l'intérieur de la chambre du détendeur, la deuxième partie du levier de régulation vient obturer l'arrivée de gaz.

Ceci permet de placer le détendeur en position de sécurité, par exemple lorsqu'une impureté vient obturer l'arrivée de gaz, ou lorsqu'il y a une fuite de gaz en aval du détendeur, ou une coupure de gaz en amont du détendeur en raison d'une bouteille/citerne vide.

La dernière caractéristique permet aussi de maintenir les deux parties de levier immobiles l'une par rapport à l'autre lorsque ce levier se meut entre sa première position de fermeture et sa position maximale d'ouverture, c'est-à-dire en configuration de régulation. En d'autres termes, ce ressort permet au levier de se comporter comme s'il était formé d'un seul tenant, en configuration de régulation.

On notera que la seule modification par rapport à un détendeur classique réside dans la structure particulière du levier, et accessoirement dans la réalisation d'une butée dans le corps du détendeur.

Ces modifications sont tout à fait mineures, et permettent de réaliser la fonction de sécurité souhaitée à très faible coût, sans apporter de modification notable à un détendeur existant.

Suivant d'autres caractéristiques optionnelles de ce détendeur :
- ledit détendeur comprend une tige solidaire dudit doigt, et un indicateur de sécurité coopérant avec cette tige, basculant vers une position visible de l'extérieur du détendeur lorsque ladite membrane se trouve en position définissant un volume minimal de ladite chambre : cet indicateur de sécurité permet à l'utilisateur de visualiser facilement le passage du détendeur en configuration de sécurité, incitant cet utilisateur à intervenir pour remédier au problème provocant une chute de pression dans la chambre du détendeur (rupture de canalisation aval, rupture d'approvisionnement en gaz amont, changement de bouteille...).

D'autres caractéristiques et avantages de la présente invention apparaîtront à la lumière de la description qui va suivre, et à l'examen des figures ci annexées, dans lesquelles :
- la figure 1 est une vue en perspective éclatée d'un détendeur selon l'invention,
- la figure 2 est une vue en perspective de ce détendeur à l'état assemblé,
- la figure 3 est une vue de ce même détenteur en perspective, un capot de protection ayant été ôté,
- la figure 4 est une vue analogue à celle de la figure 2, mais en coupe axiale,
- les figures 5 à 7 sont des vues en coupe axiale du détendeur selon l'invention, dans trois configurations différentes, à savoir respectivement dans une première position de fermeture, dans une position d'ouverture maximale, et dans une seconde position de fermeture correspondant à une configuration de sécurité, et
- les figures 8 et 9 sont des vues à plus grande échelle du levier du détendeur selon l'invention, dans des positions correspondant respectivement aux figures 5 et 6 d'une part, et à la figure 7 d'autre part.

Sur l'ensemble de ces figures, des références identiques ou analogues représentent des organes ou ensemble d'organes identiques ou analogues.

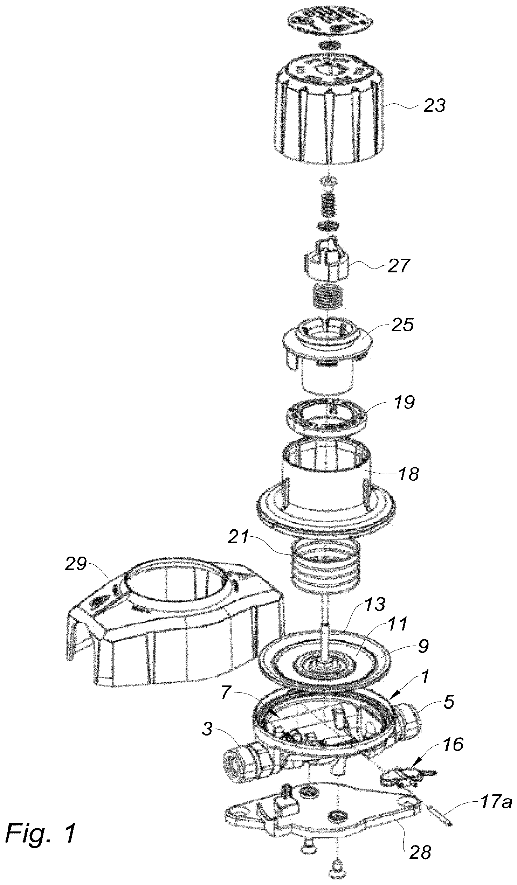

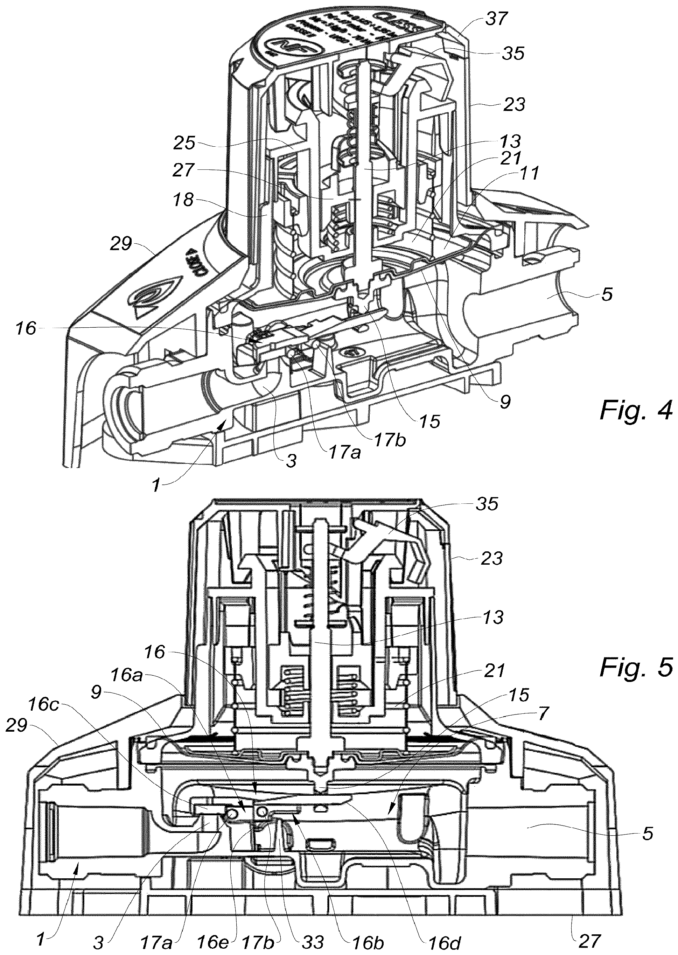

On se reporte à présent plus particulièrement aux figures 1 et 4 où l'on peut voir que le détendeur selon l'invention comprend un corps 1, muni d'une arrivée de gaz 3 et d'une sortie de gaz 5 débouchant à l'intérieur de ce corps.

Ce corps 1 définit une chambre 7 destinée à être fermée de manière étanche par une membrane souple 9, de manière à former une chambre de régulation de pression du gaz, de volume variable.

Une plaque métallique 11 vient en appui sur la membrane souple 9, et est maintenue au contact de celle-ci par une tige 13 vissée dans un doigt 15 disposé du côté de la membrane souple 9 situé à l'intérieur de la chambre 7.

Ce doigt 15 coopère avec un levier 16 monté pivotant à l'intérieur du corps 1, autour d'un première axe 17a, comme cela sera explicité plus en détail dans ce qui suit.

La membrane souple 9 ferme de manière étanche la chambre 7 grâce à un couvercle 18 serti sur le corps 1.

Une bague de réglage 19 est vissée à l'intérieur du couvercle 18.

Un ressort de régulation 21 est interposé entre la bague 19 et la plaque métallique 11.

Une manette d'arrêt 23, montée pivotante sur une douille 25 elle-même fixée sur le couvercle 18, permet, par coopération avec une came 27 sur laquelle la tige 13 est montée fixe en translation, de verrouiller le levier 16 dans une première position de fermeture, comme cela sera explicité dans ce qui suit.

Le corps 1 est vissé sur une plaque 28 permettant de fixer le détendeur sur un support approprié.

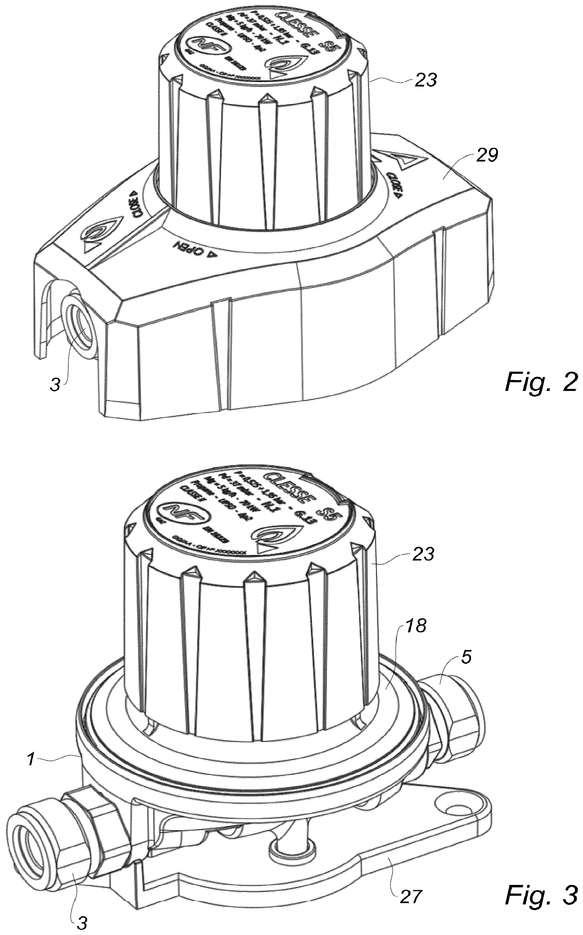

L'ensemble du détendeur est carrossé par un capot 29 comportant des indications d'ouverture et de fermeture, utiles pour l'utilisateur, comme cela est plus particulièrement visible sur la figure 2 ; l'aspect du détendeur selon l'invention une fois que le capot 29 a été ôté visible sur la figure 3.

On se reporte à présent plus particulièrement aux figures 4 et 5, sur lesquelles on peut voir le détendeur selon l'invention qui se trouve dans une première position de fermeture.

On peut voir plus particulièrement sur ces figures que le levier 16 comprend 2 parties, à savoir une première partie 16a montée pivotante par rapport au corps 1 autour du premier axe 17a, et une deuxième partie 16b montée pivotante par rapport à la première partie 16a autour d'un deuxième axe 17b.

La première partie 16a du levier 16 comprend une soupape 16c apte à venir obturer l'arrivée de gaz 3.

La deuxième partie 16b du levier 16 comprend une queue 16d apte à venir coopérer avec le doigt 15 solidaire de la membrane souple 9.

Un ressort spirale 16e tend à maintenir les premières 16a et deuxième 16b parties du levier 16 dans l'alignement l'une de l'autre.

Dans la configuration représentée aux figures 4 et 5, le levier 16 se trouve dans une première position de fermeture.

Dans cette première position de fermeture, le volume de la chambre 7 est maximal, de sorte que le doigt 15 se trouve dans sa position la plus haute, par rapport à la hauteur de la planche de dessin.

Dans cette position la plus haute, le doigt 15 maintient la soupape 16c contre le siège de l'arrivée de gaz 3, obturant ainsi cette arrivée.

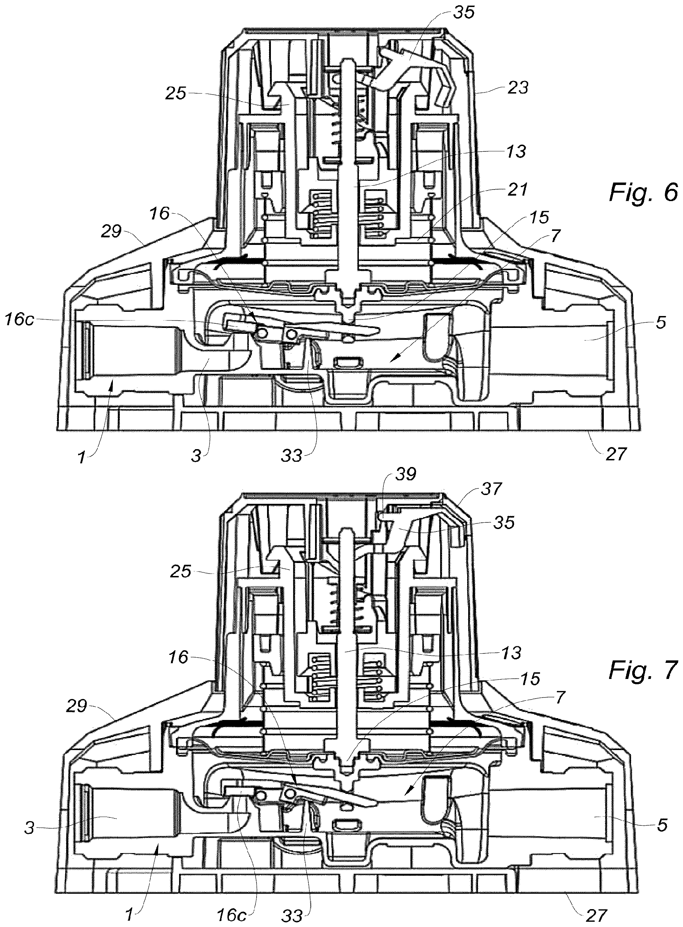

Dans la configuration représentée à la figure 6, le levier 16 se trouve dans une position d'ouverture maximale : dans cette position, le doigt 15 est redescendu par rapport à sa position des figures 4 et 5, autorisant la soupape 16c à s'écarter du siège de l'arrivée de gaz 3, permettant ainsi à du gaz de circuler de l'arrivée de gaz 3 vers l'intérieur de la chambre 7, puis de sortir du détendeur par la sortie de gaz 5.

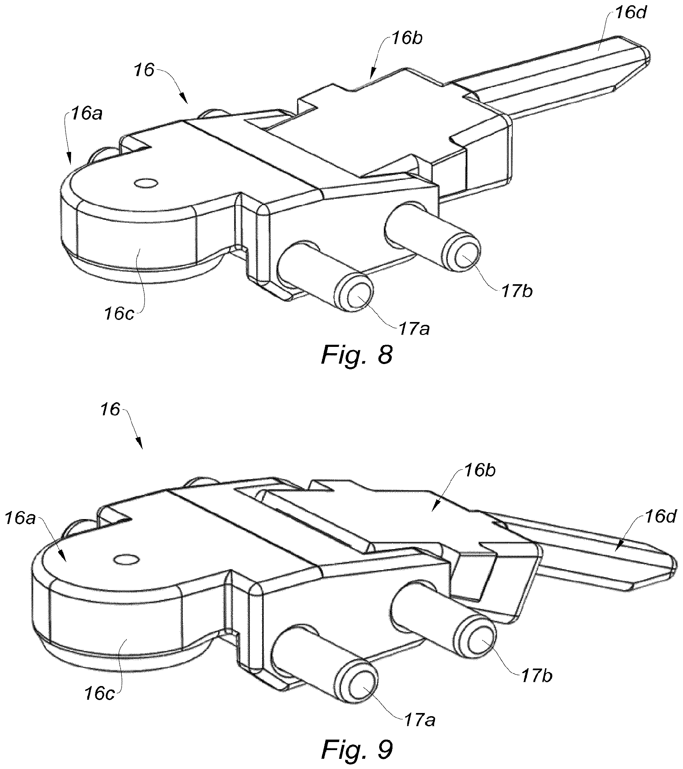

Dans cette position, les première 16a et deuxième 16b parties du levier 16 demeurent dans l'alignement l'une de l'autre, sous l'effet du rappel élastique exercé par le ressort spiral 16e, comme cela est visible plus précisément à la figure 8.

Les variations de la pression de gaz à l'intérieur de la chambre 7 ont pour effet, par action sur la membrane souple 9 et donc sur le doigt 15 et sur le levier 16, d'obturer plus ou moins l'arrivée de gaz 3, et ainsi de réaliser la fonction de régulation souhaitée pour le détendeur.

Bien entendu, l'ensemble des pièces et des mouvements sont calibrés de manière à pouvoir convertir la pression de gaz issu du réservoir (non représenté) vers la pression de gaz souhaitée pour l'utilisation de l'appareil domestique situé en aval du détendeur (également non représenté).

Dans la configuration de la figure 7, le levier 16 se trouve dans une deuxième position de fermeture, correspondant à un volume minimal de la chambre 7, c'est-à-dire dans la position la plus basse du doigt 15.

Cette position la plus basse de ce doigt 15 a pour effet d'abaisser la deuxième partie 16b du levier 16 au contact d'une butée 33 formée de préférence dans la matière du corps 1, dans le fond de la chambre 7.

L'effort exercé par le doigt 15 sur la queue 16d de la deuxième partie 16b du levier 16, a pour effet de faire pivoter cette deuxième partie par rapport à la première partie 16a autour du deuxième axe 17b, laquelle pivote alors à son tour autour du premier axe 17a, et vient alors obturer l'arrivée de gaz 3.

Cette configuration, visible plus précisément à la figure 9, correspond à une absence de pression de gaz à l'intérieur de la chambre 7, due à une anomalie telle que la présence d'une impureté obturant l'arrivée de gaz 3, ou à la présence d'une fuite dans l'installation située en aval de la sortie de gaz 5, ou à un manque de pression amont dont découle une pression nulle dans la chambre de détente.

Le détendeur se place alors dans une position dite de sécurité, empêchant toute circulation de gaz, et nécessitant une intervention pour remédier à l'anomalie.

L'attention de l'utilisateur est attirée par un indicateur 35, de préférence de couleur vive, qui bascule sous l'action du déplacement de la tige 13 d'une position visible sur les figures 5 et 6 où il est écarté d'un hublot transparent 37 formé sur la partie supérieure du bouton/manette 23, à une position où il vient pratiquement en contact avec ce hublot, par basculement autour d'un axe 39 sous l'action de la tige 13, devenant ainsi visible pour l'utilisateur qui comprend alors que le détendeur s'est placé en position de sécurité.

A noter que cet indicateur 35 est optionnel, et que le détendeur peut également être livré sans cet indicateur.

Le mode de fonctionnement et les avantages du détendeur selon la présente invention résultent directement de la description qui précède.

Le bouton 23 permet, lorsqu'il est actionné en rotation, de verrouiller à la demande le levier 16 dans sa première position de blocage visible aux figures 4 et 5 : dans cette position, le gaz ne peut pas circuler du réservoir vers l'appareil domestique.

Lorsque l'utilisateur place le bouton 23 en position d'ouverture, la tige 13 peut se déplacer librement en translation selon son axe, en fonction de la pression exercée par le gaz situé dans la chambre 7 contre la membrane souple 9.

Les déplacements de la tige 13, et donc du doigt 15, ont pour effet d'actionner la queue 16d du levier 16, ceci ayant à son tour pour effet d'écarter plus ou moins la soupape 16c du siège de l'arrivée de gaz 3, et ainsi de réaliser la fonction de régulation de la pression de gaz à l'intérieur de la chambre 7 : une pression élevée de gaz à l'intérieur de la chambre 7 a pour effet de soulever la membrane souple 9, et ainsi, par l'intermédiaire du doigt 15, de fermer l'arrivée de gaz 3 ; à l'inverse, une pression de gaz relativement faible à l'intérieur de la chambre 7 a pour effet d'abaisser la membrane souple 9, et par conséquent d'écarter la soupape 16 du siège de l'arrivée de gaz 3, et donc d'augmenter la pression de gaz à l'intérieur de la chambre 7.

En cas de très forte baisse de la pression à l'intérieur de la chambre 7, voire en cas de pression nulle, la membrane souple 9 se déplace vers sa position la plus basse possible visible à la figure 7, définissant un volume minimal de la chambre 7.

Dans cette position basse, la deuxième partie 16b du levier 16 est appuyée par le doigt 15 contre la butée 33, ainsi qu'il a été expliqué plus haut, provoquant ainsi une variation d'angle de la deuxième partie 16b du levier 16 qui pivote alors autour du deuxième axe 17b par rapport à la première partie 16a de ce levier, entraînant ainsi le pivotement de cette première partie 16a autour de son premier axe 17a, et ainsi la fermeture du siège de l'arrivée de gaz 3 par la soupape 16c.

Dans cette position de sécurité du détendeur, la circulation de gaz est complètement coupée, jusqu'à ce que l'on intervienne pour remédier à l'anomalie : débouchage de l'arrivée de gaz, ou bien remise de pression aval par remplacement de bouteille, ou bien suppression de la fuite en aval du détendeur.

Comme expliqué plus haut, l'attention de l'utilisateur sur cette anomalie est attirée par l'indicateur 35, par transparence à travers le hublot 37.

Comme on peut le comprendre à la lumière de ce qui précède, la présente invention fournit un moyen très simple de mise en sécurité d'un détendeur en cas de sous-pression / excès de débit : cette mise en sécurité est obtenue grâce à la conception particulière du levier 16 en deux parties articulées l'une par rapport à l'autre, et à la réalisation d'une butée 33 dans la masse du corps 1, susceptible de modifier l'inclinaison relative de ces deux parties de levier.

Cet agencement très simple permet, à moindre coût et avec un nombre très limité de pièces, et sans modifier notablement un détendeur classique, de réaliser la fonction UPSO souhaitée.

A noter que si l'on souhaite se passer de cette fonction UPSO, on peut remplacer le levier articulé 16 par un levier formé d'un seul tenant.

Bien entendu, la présente invention n'est nullement limitée au mode de réalisation décrit et représenté.

## Revendications

1. Détendeur de gaz, comprenant :
- un corps (1),
- une arrivée (3) et une sortie (5) de gaz débouchant dans ce corps (1),
- une membrane souple (9) définissant avec ledit corps (1) une chambre de régulation (7) de volume variable,
- un doigt d'actionnement (15) solidaire de ladite membrane (9),
- un levier (16) de régulation de débit d'arrivée de gaz coopérant avec ledit doigt (15), et monté pivotant dans ladite chambre (7) entre :
- une première position de fermeture correspondant à un volume maximal de ladite chambre (7), dans laquelle ce levier (16) obture ladite arrivée de gaz (3),
- une position maximale d'ouverture correspondant à un volume intermédiaire de ladite chambre (7), dans laquelle ce levier (16) libère un passage maximal à travers ladite arrivée de gaz (3), et
- une deuxième position de fermeture correspondant à un volume minimal de ladite chambre (7), dans laquelle ce levier obture ladite arrivée de gaz (3),
ce levier (16) comprenant une première partie (16a) montée pivotante sur ledit corps (1) autour d'un premier axe (17a), et apte à venir obturer ladite arrivée de gaz (3), le détendeur étant **caractérisé en ce qu'**il comprend une deuxième partie (16b) montée pivotante sur ladite première partie (16a) autour d'un deuxième axe (17b) et coopérant avec ledit doigt (15),
- des moyens élastiques (21) de rappel de ladite membrane (9) vers ladite position définissant un volume minimal de ladite chambre (7),
- une butée (33) solidaire dudit corps (1), disposée entre ledit doigt (15) et ledit deuxième axe (17b),
- ledit doigt (15) et ladite butée (33) maintenant ladite deuxième partie de levier (16b) dans une position inclinée par rapport à la ladite première partie de levier (16a) lorsque ce levier (16) se trouve dans ladite deuxième position de fermeture, laquelle inclinaison maintient ladite première partie de levier (16a) en position d'obturation de ladite arrivée de gaz (3), un ressort spirale (16e) étant interposé entre les premières (16a) et deuxième (16b) parties du levier (16).

2. Détendeur selon la revendication 1, comprenant une tige (13) solidaire dudit doigt (15), et un indicateur de sécurité (35) coopérant avec cette tige (13), basculant vers une position visible de l'extérieur du détendeur lorsque ladite membrane (9) se trouve en position définissant un volume minimal de ladite chambre (7).

## Patentansprüche

1. Gasdruckregler, Folgendes umfassend:
- einen Körper (1),
- eine Zufuhr (3) und einen Ausgang (5) für Gas, die in diesen Körper (1) münden,
- eine biegsame Membran (9), die mit dem Körper (1) eine Regulierungskammer (7) mit variablem Volumen definiert,
- einen Betätigungsstift (15), der fest mit der Membran (9) verbunden ist,
- einen Hebel (16) zur Durchflussregulierung der Gaszufuhr, der mit dem Stift (15) zusammenwirkt, und schwenkbar in der Kammer (7) angebracht ist, zwischen:
- einer ersten Schließposition, die einem maximalen Volumen der Kammer (7) entspricht, in der dieser Hebel (16) die Gaszufuhr (3) verschließt,
- einer maximalen Öffnungsposition, die einem Zwischenvolumen der Kammer (7) entspricht, in der dieser Hebel (16) einen maximalen Durchlass durch die Gaszufuhr (3) hindurch freigibt, und
- einer zweiten Schließposition, die einem Mindestvolumen der Kammer (7) entspricht, in der dieser Hebel die Gaszufuhr (3) verschließt,
wobei dieser Hebel (16) einen ersten Teil (16a) umfasst, der um eine erste Achse (17a) herum schwenkbar an dem Körper (1) angebracht ist, und imstande ist, die Gaszufuhr (3) zu verschließen, wobei der Gasdruckregler **dadurch gekennzeichnet ist, dass** er einen zweiten Teil (16b) umfasst, der um eine zweite Achse (17b) herum schwenkbar auf dem ersten Teil (16a) angebracht ist, und mit dem Stift (15) zusammenwirkt,
- elastische Rückstellmittel (21) der Membran (9) in die Position, die ein Mindestvolumen der Kammer (7) definiert,
- einen fest mit dem Körper (1) verbundenen Anschlag (33), der zwischen dem Stift (15) und der zweiten Achse (17b) angeordnet ist,
- wobei der Stift (15) und der Anschlag (33) den zweiten Hebelteil (16b) in einer in Bezug zum ersten Hebelteil (16a) geneigten Position hält, wenn sich dieser Hebel (16) in der zweiten Schließposition befindet, wobei die Neigung den ersten Hebelteil (16a) in Verschlussposition der Gaszufuhr (3) hält, wobei eine Spiralfeder (16e) zwischen den ersten (16a) und zweiten (16b) Teil des Hebels (16) eingesetzt ist.

2. Druckregler nach Anspruch 1, einen Stab (13) umfassend, der fest mit dem Stift (15) verbunden ist, und eine Sicherheitsanzeige (35), die mit diesem Stab (13) zusammenwirkt, die in eine von außerhalb des Druckreglers sichtbare Position schwenkt, wenn sich die Membran (9) in einer Position befindet, die ein Mindestvolumen der Kammer (7) definiert.

## Claims

1. A gas pressure reducer comprising:
- a body (1),
- a gas intake (3) and outlet (5) opening into this body (1),
- a flexible diaphragm (9) defining with said body (1) a regulation chamber (7) of variable volume,
- an actuation finger (15) secured to said diaphragm (9),
- a gas intake flow rate regulation lever (16) cooperating with said finger (15), and pivotally mounted in said chamber (7) between:
- a first closure position corresponding to a maximum volume of said chamber (7), in which this lever (16) seals said gas intake (3),
- a maximum opening position corresponding to an intermediate volume of said chamber (7), in which this lever (16) clears a maximum passage through said gas intake (3), and
- a second closure position corresponding to a minimum volume of said chamber (7), in which this lever seals said gas intake (3),
this lever (16) comprising a first portion (16a) pivotally mounted on said body (1) about a first axis (17a), and adapted to seal said gas intake (3), and a second portion (16b) pivotally mounted on said first portion (16a) about a second axis (17b) and cooperating with said finger (15),
- elastic means (21) for biasing said diaphragm (9) towards said position defining a minimum volume of said chamber (7),
- a stop (33) secured to said body (1), disposed between said finger (15) and said second axis (17b),
- said finger (15) and said stop (33) holding said second lever portion (16b) in a position inclined with respect to said first lever portion (16a) when this lever (16) is in said second closure position, which inclination holds said first lever portion (16a) in the sealing position of said gas intake (3), wherein a spiral spring (16e) is interposed between the first (16a) and second (16b) portions of the lever (16).

2. The gas pressure reducer according to any of claims 1 or 2, comprising a rod (13) secured to said finger (15), and a safety indicator (35) cooperating with this rod (13), tilting towards a position visible from outside the pressure reducer when said diaphragm (9) is in the position defining a minimum volume of said chamber (7).
